# EUROPEAN PATENT SPECIFICATION

(11) **EP 2 578 903 B1**
(45) Date of publication and mention of the grant of the patent: **26.11.2014**
(21) Application number: 10852525.4
(22) Date of filing: 04.06.2010
(51) Int. Cl.: F16H 57/02, F16H 48/38, F16H 48/40

(54) **STRUCTURE FOR FASTENING RING GEAR TO DIFFERENTIAL CASE, AND DIFFERENTIAL GEAR EMPLOYING SAME**
STRUKTUR ZUR BEFESTIGUNG EINES HOHLRADES AN EINEM AUSGLEICHSGEHÄUSE UND DIFFERENZIALGETRIEBE DAMIT
STRUCTURE POUR FIXATION D'UNE COURONNE DENTÉE SUR UN CARTER DE DIFFÉRENTIEL, ET ENGRENAGE DIFFÉRENTIEL L'EMPLOYANT

(43) Date of publication of application: 10.04.2013
(73) Proprietor: TOYOTA JIDOSHA KABUSHIKI KAISHA, Toyota-shi, Aichi-ken, 471-8571 (JP)
(72) Inventor: TANIGUCHI Makoto, Toyota-shi, Aichi-ken, 471-8571 (JP); UKAI Yoshihiko, Toyota-shi, Aichi-ken, 471-8571 (JP); TSUNEKAWA Hirokazu, Toyota-shi, Aichi-ken, 471-8571 (JP); SHIOIRI Hiroyuki, Toyota-shi, Aichi-ken, 471-8571 (JP)
(74) Representative: Albutt, Anthony John
(86) International application number: PCT/JP2010/059536
(87) International publication number: WO 2011/151921

(56) References cited:
- EP-A1- 0 647 789
- EP-A1- 0 647 789
- FR-A1- 2 580 349
- JP-A- 9 014 402
- JP-A- 57 090 413
- JP-A- 2003 294 114
- JP-U- 55 075 515
- JP-U- 61 036 747
- JP-U- S59 157 149

## Description

### TECHNICAL FIELD

The present invention relates to a structure for fastening a ring gear to a differential case, and a differential device employing the same.

### BACKGROUND ART

A differential gear used for a drive mechanism of an automobile is specifically used for a shaft for coupling drive wheels of the automobile as one example of a differential device to absorb a speed difference of an inner wheel and an outer wheel when the automobile goes round a curve.

To be concise, the differential gear consists of a ring gear held outside the differential case, a pinion gear placed in and attached to the differential case; and a gear attached to an axle to be engaged with the pinion gear.

A drive force generated by an engine and others of the automobile is transmitted to the ring gear fastened to the differential case, and the force is further transmitted to the axle by rotating the gear attached to the axle through the pinion gear attached to the differential case.

As another example of the differential device used in an automobile, there is a LSD designed to make up a defect that an axle rotates idle when one of wheels is under no-load condition. This LSD is similar to the above in a structure including a ring gear provided outside a differential case.

Heretofore, as a method of fastening a ring gear to a differential case of a differential device, a fastening method using a bolt is adopted.

However, this fastening method using a bolt leads to a problem of increase in weight due to weight of the bolt, a thickness required for fastening, and the like needed to be taken into consideration.

Instead of using a bolt, it has been studied as another method that the differential case is fastened with the ring gear by swaging or caulking (for example, refer to EP 0647789A). FIG. 10 is a schematic configuration view of a differential gear 110 of a conventional art. FIG. 11 is a diagram showing a mounting operation of a differential gear 112. FIG. 12 is a view showing a press-fitting step of a ring gear 103 to be press-fitted in a differential case 102, showing a state before completion of the press-fitting. FIG. 13 is a view showing the press-fitting step of the ring gear 103 press-fitted to the differential case 102 after completion of the press-fitting. FIG. 14 is a view showing a swaging step of the ring gear to be swaged and fixed to the differential case 102.

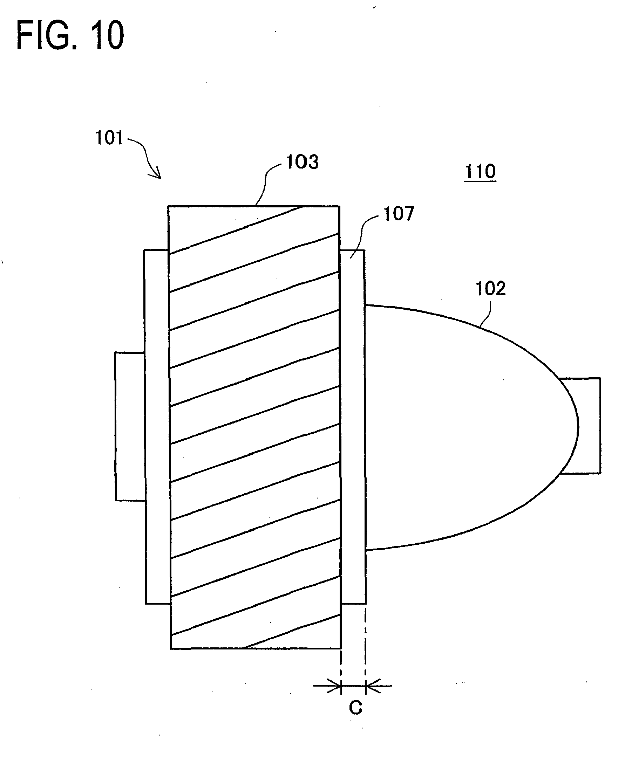

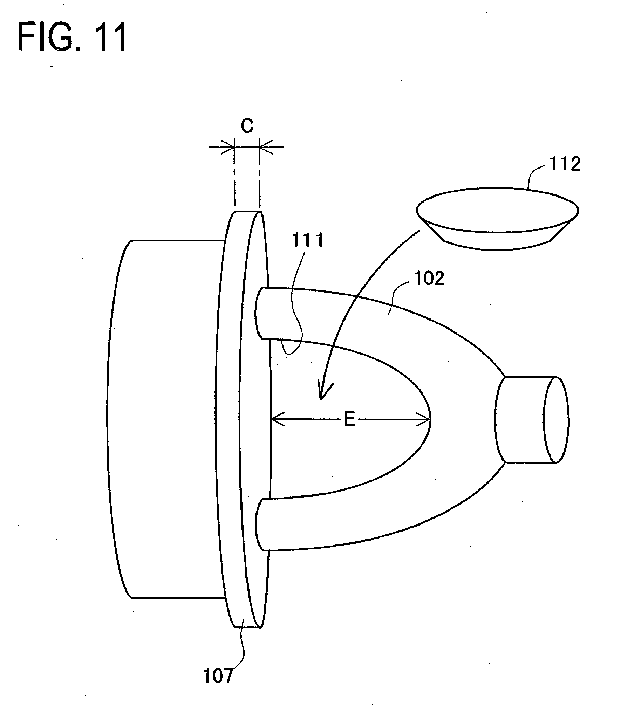

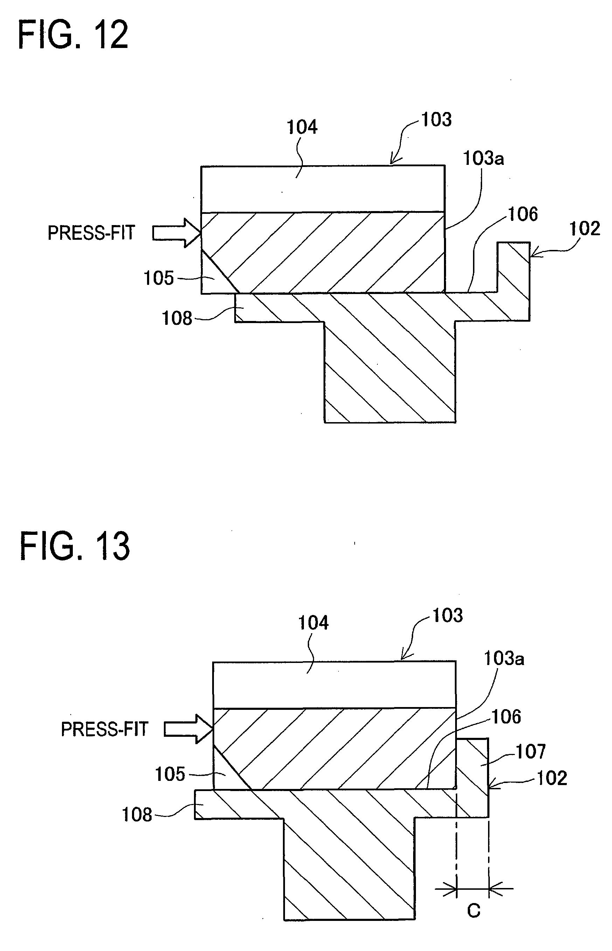

The differential gear 110 in FIG. 10 applies a fastening structure 101 to fasten the ring gear 103 in a manner that the annular ring gear 103 is press-fitted to an outer peripheral surface of the differential case 102 at its one end in FIG. 11, and then the ring gear 103 is fastened by swaging. As shown in FIGs. 12 to 14, an outer peripheral surface of the ring gear 103 is provided with a gear part 104 to receive a driving force. An inner peripheral surface of the ring gear 103 is formed with a plurality of notches 105 sequentially arranged in a circumferential direction.

As shown in FIG. 12, the differential case 102 is provided with a case-side press-fitting surface 106 coaxially formed with the case 102 to be press-fitted with the ring gear 103. On an outer side (right-end side in the figure) of the press-fitting surface 106, a heel part 107 extends vertically to the press-fitting surface 106 to restrict a press-fitting amount of the ring gear 103. On an inner side (left-end side in the figure) of the surface 106, a flange 108 extends in an axial direction of the case 102. A length of the flange 108 extending from the surface 106 is determined such that the flange 108 protrudes out beyond the ring gear 103 when the ring gear 103 is press-fitted to the press-fitting surface 106 until the ring gear 103 comes into contact with the heel part 107.

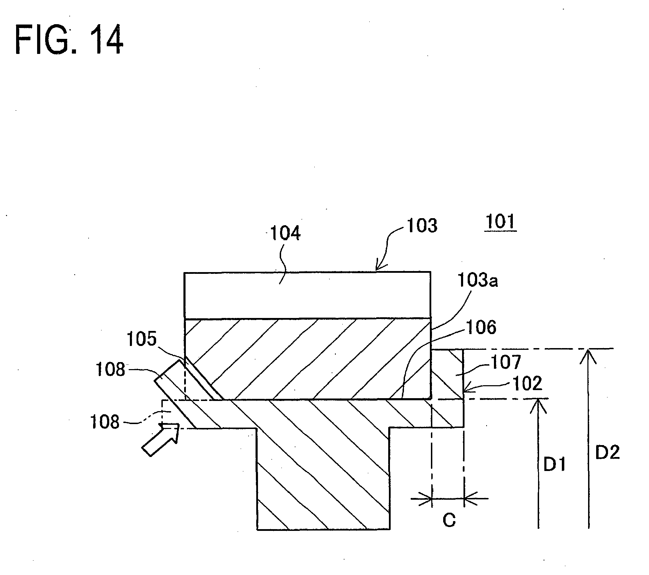

In the differential gear 110 having the above configuration, as shown in FIG. 12, the ring gear 103 is press-fitted from the flange 108 side to the case-side press-fitting surface 106 of the differential case 102. As shown in FIG. 13, the ring gear 103 is press-fitted to the press-fitting surface 106 until an end surface 103a comes into contact with the heel part 107. At this time, the ring gear 103 is press-fitted to the surface 106 so that the notches 105 are positioned opposite to the heel part 107 side. Then, as shown in FIG. 14, a part of the flange 108 protruding from the ring gear 103 is bent toward the notches 105 to press against the notches 105, so that the material of the flange 108 plastically flows into the notches 105. Thereby, the ring gear 103 is fastened to the notches 105 by swaging the flange 108 and held between a swaged part and the heel part 107.

### SUMMARY OF INVENTION

### PROBLEMS TO BE SOLVED BY THE INVENTION

As shown in FIG. 14, the conventional differential gear 110 includes the heel part 107 outside the case-side press-fitting surface 106 (right-end side in the figure), and thereby the length of the differential case 102 in the axial direction is made long by a thickness C of the heel part 107 in the axial direction as shown in FIGs. 10 and 11. Especially, in the press-fitting step that the ring gear 103 is press-fitted to the case-side press-fitting surface 106 of the differential case 102, a load of as much as 800kg may be exerted on the heel part 107, for example. Further, when the differential gear 110 is operated for power transmission, the swaged portions of the flange 108 and the notches 105 are subjected to a load of as much as 2 tons, for example, and an engagement reaction force between the flange 108 and the notches 105 acts on the heel part 107. In order to counteract these press-fitting load and engagement reaction force, the heel part 107 requires a certain thickness C in the axial direction as shown in FIGs. 10, 11, and 14, leading to a long length of the differential case 102 in the axial direction. Furthermore, in order to position the ring gear 103 by the heel part 107, an outer diameter D2 of the heel part 107 has to be larger than an outer diameter D1 of the case-side press-fitting surface 106 as shown in FIG. 14. For this reason, in the conventional fastening structure 101 and the differential gear 110, the heel part 107 largely protrudes outside the ring gear 103.

The larger the axial thickness C and the outer diameter D2 of the heel part 107 are, the heavier the material weight becomes, resulting in cost increase.

Also, when the heel part 107 protrudes outside the case-side press-fitting surface 106, components collide against each other during conveyance, causing scratches or dents on the heel part 107. If the heel part 107 has the scratches or the dents on its surface to face with the end surface 103a of the ring gear 103, the ring gear 103 cannot be precisely positioned in place with respect to the differential case 102. In this case, the case 102 is regarded as a defective piece, and thereby, a yield could be worsened.

Further, in the differential gear 110, the differential gear 112 is attached to a mounting space 111 provided in the case 102 as shown in FIG. 11. For automatically mounting the differential gear 112 in the mounting space 111, the mounting space 111 has to be designed such that the differential gear 112 is entirely accommodated in the case 102. However, when the axial length of the differential gear 102 is long, it is difficult to have an axial length E of the mounting space 111 long enough to entirely store the differential gear 112.

The present invention is made to solve the above problem and to provide a structure for fastening a ring gear to a differential case and a differential device employing the same that enables reduction in size of the differential case.

### MEANS OF SOLVING THE PROBLEMS

To solve the above problem, one aspect of the present invention is a structure for fastening a ring gear to a differential case, wherein the ring gear includes: an annular gear-side press-fitting surface; a protrusion formed more inside than the gear-side press-fitting surface; and a notch formed on an opposite side from the gear-side press-fitting surface with respect to the protrusion, and the differential case includes: an annular case-side press-fitting surface press-fitted with the gear-side press-fitting surface; a flange swaged into the notch, the flange having an outer diameter smaller than that of the case-side press-fitting surface; a case-side smooth surface placed in contact with the protrusion so that the ring gear is positioned with respect to the differential case, and a length of the case-side press-fitting surface in an axial direction is formed longer than a length of the protrusion.

In the above fastening structure of the ring gear and the differential case, preferably, the protrusion is provided orthogonal to an axis of the ring gear, and the case-side smooth surface is provided orthogonal to an axis of the differential case.

In the above fastening structure of the ring gear and the differential case, preferably, the protrusion is positioned inside the gear-side press-fitting surface such that a length of the gear-side press-fitting surface in a press-fitting direction is equal to a length of the case-side press-fitting surface in the press-fitting direction.

To solve the above problem, another aspect of the present invention is a differential device using the fastening structure of the ring gear and the differential case according to any one of the above structure for fastening a ring gear to a differential case.

### EFFECTS OF THE INVENTION

According to the above mentioned structure for fastening the ring gear to the differential case and the differential device employing the same, the case-side press-fitting surface and the gear-side press-fitting surface are press-fitted together until the protrusion of the ring gear comes into contact with the case-side smooth surface. Then, the flange is pressed against the notches to be swaged or caulked. The ring gear is placed in position with respect to the differential case by the close contact of the protrusion with the case-side smooth surface. Since the protrusion is formed inside the gear-side press-fitting surface and placed between the notches and the gear-side press-fitting surface, the contact portion with the case-side smooth surface does not extend outside the differential case. Therefore, the above mentioned fastening structure of the ring gear and the differential case and the differential gear employing the same do not need to provide a protrusion outside the case-side press-fitting surface for positioning the ring gear to the differential case, achieving size reduction of the differential case.

In the above fastening structure of the ring gear and the differential case, the protrusion is formed orthogonal to the axis of the ring gear, and the case-side smooth surface is formed orthogonal to the axis of the differential case. Thereby, when the ring gear is press-fitted to the differential case by bringing the protrusion into contact with the case-side smooth surface, the protrusion is in surface contact with the case-side smooth surface and positioned in place. Accordingly, in the above fastening structure of the ring gear and the differential case, the ring gear can be precisely positioned in place with respect to the differential case.

In the above fastening structure of the ring gear and the differential case, the protrusion is placed inside the gear-side press-fitting surface such that the length of the gear-side press-fitting surface in the press-fitting direction is equal to the length of the case-side press-fitting surface in the press-fitting direction. Thereby, the ring gear does not extend outside the differential case when the protrusion comes into contact with the case-side smooth surface to be positioned in place.

### BRIEF DESCRIPTION OF THE DRAWINGS

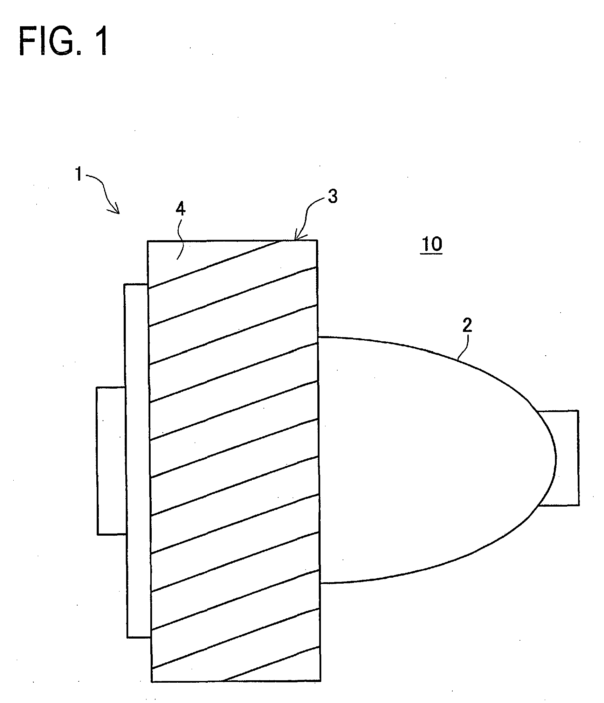

FIG. 1 is a schematic view of a configuration of a differential device employing a fastening structure of a ring gear and a differential case according to a first embodiment of the present invention;

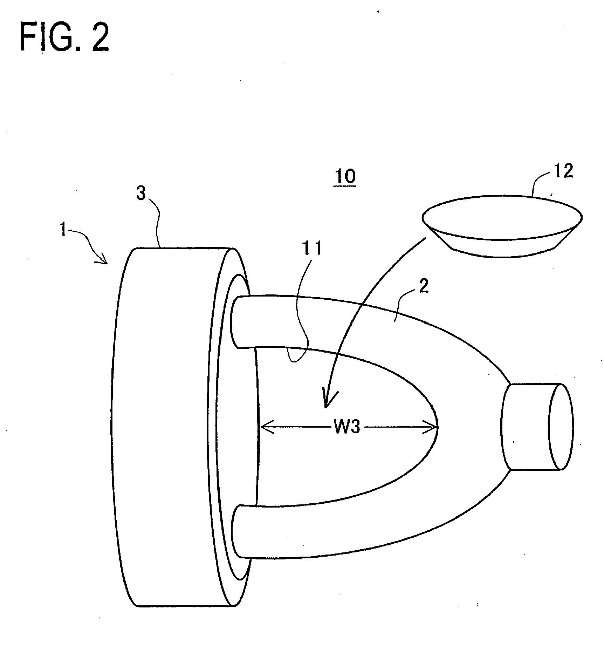

FIG. 2 is a diagram of the fastening structure of the ring gear and the differential case according to the first embodiment of the present invention;

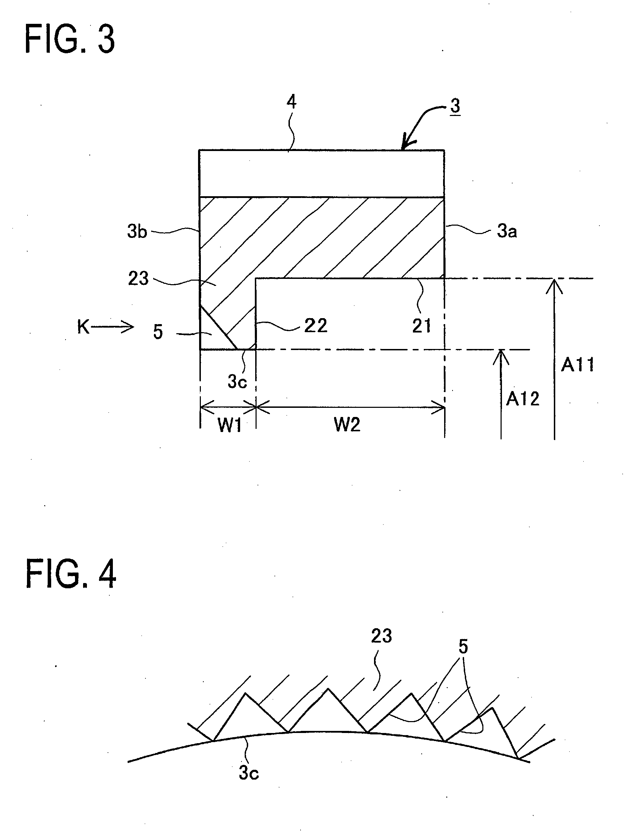

FIG. 3 is a partial sectional view of the ring gear in a direction orthogonal to an axial direction of the ring gear;
FIG. 4 is a partial enlarged view of an inner peripheral surface of the ring gear seen from a direction K in FIG. 3;

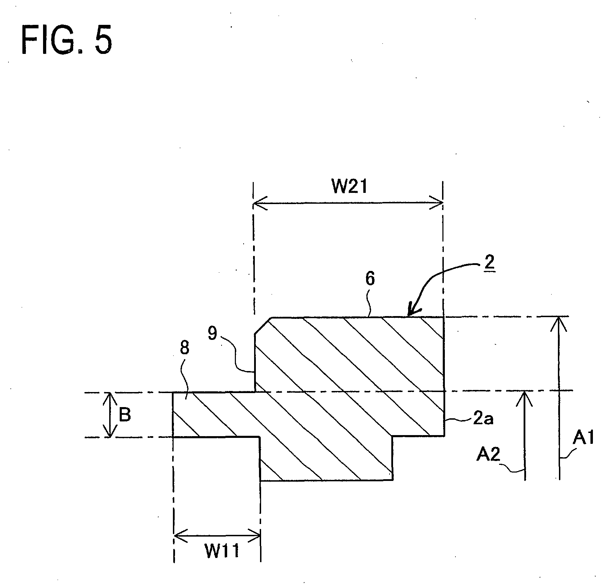

FIG. 5 is a partial sectional view of the differential case;

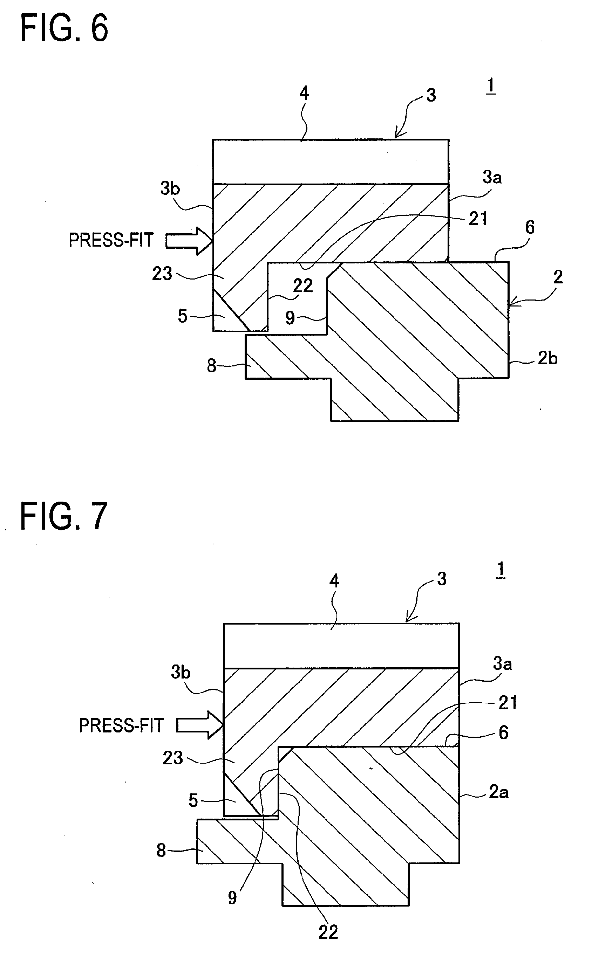

FIG. 6 is an explanatory view showing a press-fitting step before completion of press-fitting;
FIG. 7 is an explanatory view showing the press-fitting step after the completion of the press-fitting;

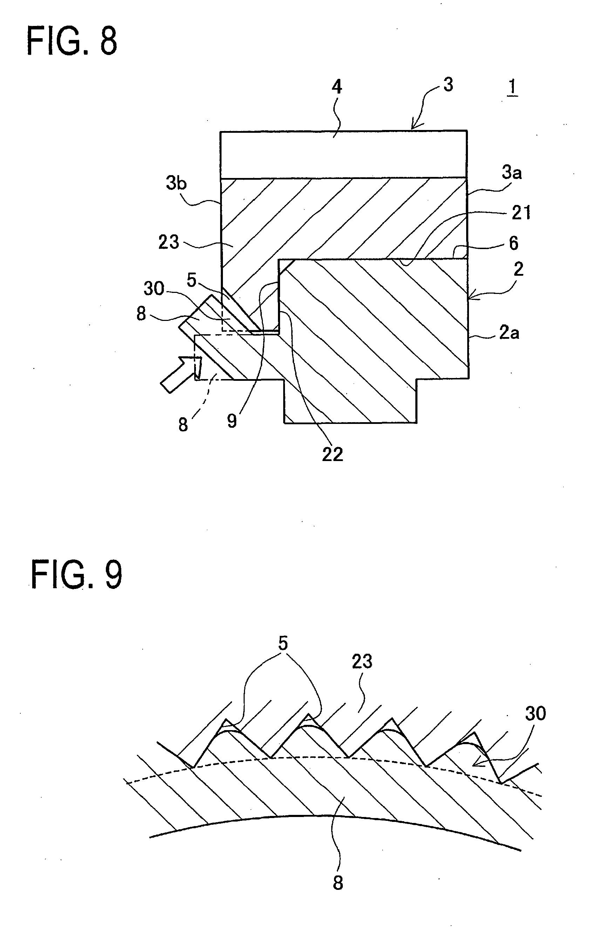

FIG. 8 is an explanatory view showing a swaging step;
FIG. 9 is a partial enlarged view of a swaged part;
FIG. 10 is a schematic view showing a configuration of a conventional differential gear;
FIG. 11 is a diagram showing a mounting operation of a differential gear;
FIG. 12 is a view showing a press-fitting step of a ring gear to be press-fitted to a differential case, showing a state before completion of press-fitting;
FIG. 13 is a view showing the press-fitting step of the ring gear press-fitted to the differential case after the completion of the press-fitting; and
FIG. 14 is a view showing a swaging step of the ring gear to be swaged and fixed to the differential case.

### REFERENCE SIGNS LIST

- 1: Structure for fastening a ring gear to a differential case
- 2: Differential case
- 3: Ring gear
- 6: Case-side press-fitting surface
- 8: Flange
- 9: Case-side smooth surface
- 10: Differential gear (one example of a differential device)
- 21: Gear-side press-fitting surface
- 23: Protrusion

### MODE FOR CARRYING OUT THE INVENTION

One embodiment illustrating a structure for fastening a ring gear to a differential case and a differential gear employing the same of the present invention is herein described in detail with reference to the accompanying drawings.

FIG. 1 is a schematic view showing a configuration of a differential device employing a structure 1 for fastening a ring gear 3 to a differential case 2 (hereinafter, referred to as a fastening structure 1) in a first embodiment of the present invention. FIG. 2 is a diagram of the fastening structure 1 of the differential case 2 and the ring gear 3 in the first embodiment of the present invention.

The fastening structure 1 in FIGs. 1 and 2 is applied to a differential gear 10 (one example of a differential device) used for a drive mechanism of an automobile as similar to prior arts. In the fastening structure 1, the ring gear 3 is fastened to the differential case 2 in a manner that the ring gear 3 is press-fitted to the differential case 2 and swaged or caulked.

In the differential gear 10, rotation torque is transmitted to the ring gear 3 and further transmitted to the differential case 2 through a swaged part and a press-fitted part with respect to the ring gear 3, so that the differential case 2 integrally rotates with the ring gear 3.

As shown in FIG. 2, the differential case 2 is provided with a mounting space 11 for mounting a differential gear 12. In the mounting space 11, a not-shown pinion gear is placed in a non-rotatable manner via a not-shown pinion shaft. The differential gear 12 is placed in the mounting space 11 so that the gear 12 is entirely accommodated in the mounting space 11 and engaged with the not-shown pinion gear. A not-shown axle is connected to the gear 12. In the differential gear 10 having this configuration, when the differential case 2 rotates integrally with the ring gear 3, the not-shown pinion gear rotates integrally with the differential case 2 via the not-shown pinion shaft and the rotation torque transmitted from the ring gear 3 to the differential case 2 is changed its direction to be transmitted to the gear 12, and thus the axle rotates. The fastening structure 1 applied to the above explained differential gear 10 has the configuration that a part provided for positioning the ring gear 3 with respect to the differential case 2 in an axial direction is formed so as not to extend outside the ring gear 3.

The ring gear 3 shown in FIGs. 1 and 2 is made from low-carbon steel and formed as a short cylinder extending in the axial direction. A surface of the ring gear 3 is subjected to carburizing. As shown in FIG. 1, a gear part 4 is formed in an outer peripheral surface of the ring gear 3 to receive the rotation torque from an external device.

FIG. 3 is a partial sectional view of the ring gear 3 in a direction orthogonal to the axial direction. FIG. 4 is a partial enlarged view of an inner peripheral surface 3c of the ring gear 3, seen from a direction K in FIG. 3.

As shown in FIG. 3, the ring gear 3 is formed with an annular gear-side press-fitting surface 21 extending from a first end surface 3a in a right side of the figure. The gear-side press-fitting surface 21 has an inner diameter A11 determined larger than an inner diameter A12 of the inner peripheral surface 3c of the ring gear 3 so that the surface 21 is formed coaxial with an axis of the ring gear 3. The press-fitting surface 21 has a predetermined length W2 extending from the first end surface 3a in the axial direction. The ring gear 3 is further formed with a protrusion 23 having a predetermined length W1 extending from a second end surface 3b in a left side of the figure in the axial direction, the protrusion 23 being annularly formed inside (left side in the figure) the press-fitting surface 21. A gear-side smooth surface 22 is configured as a surface (a side surface of the protrusion 23 in the press-fitting surface 21 side) to form a stepped portion between the inner peripheral surface 3c of the ring gear 3 and the press-fitting surface 21. The smooth surface 22 is formed flat to be orthogonal to the axis of the ring gear 3.

The predetermined length W1 of the protrusion 23 in the axial direction is determined long enough to have rigidity to prevent deformation of the protrusion 23 due to the press-fitting load caused when the ring gear 3 is press-fitted to the differential case 2 and to prevent deformation of the protrusion 23 due to the engagement reaction force of the gear part 4 caused when the rotation torque acting on the gear part 4 is transmitted from the ring gear 3 to the differential case 2.

The ring gear 3 is formed with a plurality of notches 5 positioned on an opposite side from the press-fitting surface 21 with respect to the protrusion 23. As shown in FIG. 4, the notches 5 are mountain-shaped when seen from the second end surface 3b side of the ring gear 3 (the direction K in FIG. 3). The notches 5 are sequentially formed along an edge of the inner peripheral surface 3c of an opening formed in the second end surface 3b of the ring gear 3.

FIG. 5 is a partial sectional view of the differential case 2.

The differential case 2 is made from cast iron which is softer than the material of the ring gear 3 so that the case 2 is easy to cause plastic flow during swaging. The differential case 2 includes a case-side press-fitting surface 6, a flange 8, a case-side smooth surface 9, the mounting space 11, and others, which are formed by cutting.

The case-side press-fitting surface 6 is annularly formed on an outer peripheral surface of the differential case 2 at its one end so that the surface 6 is press-fitted with the gear-side press-fitting surface 21 of the ring gear 3. The flange 8 has an outer diameter A2 smaller than an outer diameter A1 of the press-fitting surface 6 and is to be swaged with the notches 5 of the ring gear 3. The flange 8 is annularly configured. The press-fitting surface 6 and the flange 8 are formed coaxial with an axis of the differential case 2. The case-side smooth surface 9 is configured as a stepped portion formed between the press-fitting surface 6 and the flange 8. The smooth surface 9 is formed flat to be orthogonal to the axis of the differential case 2.

The outer diameter A1 of the case-side press-fitting surface 6 is determined larger than the inner diameter A11 of the gear-side press-fitting surface 21 shown in FIG. 3 so that the press-fitting surface 6 includes a press-fitting allowance. The press-fitting surface 6 has a length W21 in the axial direction determined equal to the predetermined axial length W2 of the gear-side press-fitting surface 21 so that a first end surface 2a of the differential case 2 and the first end surface 3a of the ring gear 3 are positioned to be flush with each other when the protrusion 23 comes into contact with the smooth surface 9 and is positioned in place in the axial direction. The axial length W21 is determined long enough to prevent deformation of the smooth surface 9 due to the engagement reaction force generated on the gear part 4 when the drive force is transmitted from the ring gear 3 to the gear part 4 and due to the press-fitting load generated when the ring gear 3 is press-fitted to the differential case 2.

The flange 8 is formed to protrude from the smooth surface 9 by a predetermined length W11 in the axial direction of the differential case 2. The flange 8 is annularly formed to be coaxial with the press-fitting surface 6. The predetermined axial length W11 is determined to be longer than the predetermined length W1 of the protrusion 23 as shown in FIG. 3 such that an end portion of the flange 8 protrudes out beyond the second end surface 3b of the ring gear 3 when the gear-side press-fitting surface 21 is press-fitted to the press-fitting surface 6 until the protrusion 23 comes into contact with the case-side smooth surface 9. A thickness B of the flange 8 in a radial direction is determined to allow deformation of the flange 8.

### <Fastening Method of a Differential Case and a Ring Gear>

FIG. 6 is an explanatory view showing a press-fitting step, showing a state before completion of press-fitting. FIG. 7 is an explanatory view showing the press-fitting step after completion of the press-fitting. FIG. 8 is an explanatory view showing a swaging step. FIG. 9 is a partial enlarged view of a swaged part 30.

As shown in FIG. 6, the press-fitting surface 21 of the ring gear 3 is brought into contact with the case-side press-fitting surface 6 from the flange 8 side of the differential case 2, and the ring gear 3 is pressed in the axial direction to press-fit the gear-side press-fitting surface 21 to the press-fitting surface 6. As shown in FIG. 7, the press-fitting surface 21 of the ring gear 3 is press-fitted to the press-fitting surface 6 until the gear-side smooth surface 22 comes into contact with the case-side smooth surface 9 of the differential case 2.

When the protrusion 23 comes into contact with the case-side smooth surface 9 and the gear-side press-fitting surface 21 is press-fitted to the case-side press-fitting surface 6, for example, a load of as much as 800 kg is exerted on the smooth surface 9. However, the smooth surface 9 and others are not deformed by the press-fitting load since the axial length W21 of the press-fitting surface 6 is determined long enough to counteract the press-fitting load. Further, the protrusion 23 is not deformed since the axial length W1 is determined long enough to counteract the press-fitting load.

The gear-side smooth surface 22 and the case-side smooth surface 9 are formed flat with no roughness. Further, the gear-side smooth surface 22 is formed orthogonal to the axis of the ring gear 3, and the case-side smooth surface 9 is formed orthogonal to the axis of the differential case 2. Namely, the ring gear 3 is precisely positioned in place with respect to the differential case 2 in the axial direction by the surface contact of the gear-side smooth surface 22 and the case-side smooth surface 9.

Furthermore, the gear-side press-fitting surface 21 is annularly formed to be coaxial with the axis of the ring gear 3, and the case-side press-fitting surface 6 is annularly formed to be coaxial with the axis of the differential case 2. Thereby, the ring gear 3 is radially positioned in place with respect to the differential case 2 by the press-fitted part of the gear-side press-fitting surface 21 and the case-side press-fitting surface 6.

Subsequently, the flange 8 of the differential case 2 extending laterally beyond the second end surface 3b of the ring gear 3 is pushed and bent toward the ring gear 3 to be firmly pressed against the notches 5 as shown in FIG. 8. Since the flange 8 has hardness lower than the notches 5, the material of the flange 8 plastically flows to be filled in each notch 5 by pressing the flange 8 to the notches 5. Thereby, as shown in FIG. 9, the flange 8 is plastically deformed to get into the mountain-shaped portion in section of each notch 5 and swaged, thus the swaged part 30 being formed.

According to the above explained press-fitting step and swaging step, the protrusion 23 is held between the swaged part 30 of the flange 8 with the notches 5 and the contact portion of the case-side smooth surface 9 with the gear-side smooth surface 22, so that the ring gear 3 is prevented from being misaligned relative to the differential case 2 in the axial direction. The ring gear 3 is also prevented from being misaligned relative to the case 2 in the radial direction by the press-fitted part of the case-side press-fitting surface 6 with the gear-side press-fitting surface 21. In this state, the ring gear 3 is held in the case 2.

### <Explanation of Drive Transmission Operation>

In the differential gear 10 in FIG. 2, the differential case 2 integrally rotates with the ring gear 3 when the rotation torque acts on the gear part 4 of the ring gear 3, and the drive power is transmitted to the differential gear 12. The power transmission from the ring gear 3 to the differential case 2 is done through the press-fitted part of the gear-side press-fitting surface 21 with the case-side press-fitting surface 6 and the swaged part 30 of each notch 5 and the flange 8.

For example, the engagement reaction force is generated on the gear part 4 when the rotation torque is transmitted from the not-shown drive gear. In this case, an engagement reaction force of as much as 2 tons may act on the case-side smooth surface 9 and the protrusion 23, for example. However, the case-side smooth surface 9 and others are not deformed by the engagement reaction force since the axial length W21 of the case-side press-fitting surface 6 is determined long enough to counteract the engagement reaction force. Further, the protrusion 23 is not deformed by the engagement reaction force since the axial length W1 is determined long enough to counteract the engagement reaction force. In addition, the differential case 2 is formed with the case-side smooth surface 9 provided inside the case-side press-fitting surface 6, so that width (heights) of the case-side smooth surface 9 in the radial direction can be kept equal to or longer than width (heights) of the heel part 107 in the radial direction of the conventional fastening structure 101 shown in FIGs. 10 to 14. Accordingly, the gear-side press-fitting surface 21 and the case-side press-fitting surface 6 do not slide each other to cause friction on the press-fitted part during the torque transmission, so that the rotation torque can be reliably transmitted from the ring gear 3 to the differential case 2.

### <Operational Effects>

According to the above mentioned fastening structure 1 and the differential gear 10, the case-side press-fitting surface 6 and the gear-side press-fitting surface 21 are press-fitted together until the protrusion 23 of the ring gear 3 comes into contact with the case-side smooth surface 9. Then, the flange 8 is pressed against the notches 5 to be swaged. The ring gear 3 is positioned in place with respect to the differential case 2 by bringing the protrusion 23 into contact with the case-side smooth surface 9. Since the protrusion 23 is formed inside the press-fitting surface 21 and positioned between the notches 5 and the press-fitting surface 21, the contact portion with the case-side smooth surface 9 does not extend outside the case 2. Thereby, the fastening structure 1 and the differential gear 10 employing the same in the present embodiment do not need to provide the heel part 107 outside the case-side press-fitting surface 106 (on the first end surface 3a opposite to the second end surface 3b formed with the notches 5) as the conventional differential case 102 in FIG. 11. Therefore, the axial length of the differential case 2 can be made short, and size reduction of the case 2 can be achieved.

The size reduction in the differential case 2 is accompanied with the effect of cost reduction by reducing weight of the material used for the case 2.

Further, since the case 2 has the overall axial length shorter than the conventional case 102 by the thickness C of the heel part 107 in the axial direction, the axial length W3 of the mounting space 11 where the gear 12 is to be mounted (see FIG. 2) can be designed with high flexibility.

Furthermore, since the protrusion 23 is formed more inside than the gear-side press-fitting surface 21 and the case-side smooth surface 9 is formed more inside than the case-side press-fitting surface 6, the smooth surface 22 of the protrusion 23 and the smooth surface 9 of the case 2 hardly suffer from scratches or dents due to a bump or collision of components during conveyance of the components. Less scratches and less dents on facing surfaces of the case-side smooth surface 9 and the gear-side smooth surface 22 lead to accurate positioning of the ring gear 3 and the case 2 in the axial direction, so that yield of the ring gear 3 and the case 2 can be improved.

In the above fastening structure 1, the protrusion 23 is formed orthogonal to the axis of the ring gear 3, and the case-side smooth surface 9 is formed orthogonal to the axis of the differential case 2. Specifically, the protrusion 23 is in surface contact with the case-side smooth surface 9 to be positioned in place when the ring gear 3 is press-fitted to the case 2 and the protrusion 23 comes into contact with the case-side smooth surface 9. Therefore, according to the fastening structure 1 of the present embodiment, the ring gear 3 can be accurately positioned in place with respect to the case 2.

In the above fastening structure 1, the protrusion 23 is positioned inside the gear-side press-fitting surface 21 such that the length W2 in the press-fitting direction of the press-fitting surface 21 is equal to the length W21 of the case-side press-fitting surface 6, so that the ring gear 3 does not extend outside the differential case 2 when the protrusion 23 comes into contact with the case-side smooth surface 9 to be positioned in place.

The present invention may be embodied with various modification without limited to the above mentioned embodiment.

For example, in the above embodiment, the protrusion 23 is annularly formed in the ring gear 3. Alternatively, the protrusion 23 may be divided into three or more in a circumferential direction of the ring gear 3.

## Claims

1. A structure (1) for fastening a ring gear (3) to a differential case (2),
wherein the ring gear (3) includes:
- an annular gear-side press-fitting surface (21); and
- a notch (5);
the differential case (2) includes:
- an annular case-side press-fitting surface (6) press-fitted with the gear-side press-fitting surface (21); and
- a flange (8) swaged into the notch (5);
**characterized in that**
- the ring gear (3) further includes a protrusion (23) formed more inside than the gear-side press-fitting surface (21);
- the notch (5) formed on an opposite side from the gear-side press-fitting surface (21) with respect to the protrusion (23);
- the flange (8) having an outer diameter (A2) smaller than an outer diameter (A1) of the case-side press-fitting surface (6);
- a case-side smooth surface (9) of the differential case (2) placed in contact with the protrusion (23) so that the ring gear (3) is positioned with respect to the differential case (2), and
- a length (W21) of the case-side press-fitting surface (6) in an axial direction is formed longer than a length (W1) of the protrusion (23).

2. The fastening structure (1) of the ring gear (3) and the differential case (2) according to claim 1, wherein
the protrusion (23) is provided orthogonal to an axis of the ring gear (3), and
the case-side smooth surface (9) is provided orthogonal to an axis of the differential case (2).

3. The fastening structure (1) of the ring gear (3) and the differential case (2) according to claim 1 or 2, wherein the protrusion (23) is positioned inside the gear-side press-fitting surface (21) such that a length (W2) of the gear-side press-fitting surface (21) in a press-fitting direction is equal to a length (W21) of the case-side press-fitting surface (6) in the press-fitting direction.

4. A differential device (10) using the fastening structure (1) of the ring gear (3) and the differential case (2) according to any one of claims 1 to 3.

## Patentansprüche

1. Aufbau (1) zum Befestigen eines Hohlrads (3) an einem Differentialgehäuse (2), wobei das Hohlrad (3) beinhaltet:
• eine ringförmige radseitige Einpressoberfläche (21); und
• eine Kerbe (5);
wobei das Differentialgehäuse (2) beinhaltet:
• eine ringförmige gehäuseseitige Einpressoberfläche (6), die mit der radseitigen Einpressoberfläche (21) eingepresst ist; und
• einen Flansch (8), der in die Kerbe (5) fassongeschmiedet ist;
**dadurch gekennzeichnet, dass**
• das Hohlrad (3) ferner einen Vorsprung (23) beinhaltet, der weiter innen ausgebildet ist als die radseitige Einpressoberfläche (21);
• die Kerbe (5) auf einer der radseitigen Einpressoberfläche (21) im Verhältnis zu dem Vorsprung (23) gegenüberliegenden Seite ausgebildet ist;
• der Flansch (8) einen Außendurchmesser (A2) hat, der kleiner ist als ein Außendurchmesser (A1) der gehäuseseitigen Einpressoberfläche (6);
• eine gehäuseseitige glatte Oberfläche (9) des Differentialgehäuses (2) mit dem Vorsprung (23) in Kontakt steht, so dass das Hohlrad (3) im Verhältnis zu dem Differentialgehäuse (2) positioniert ist, und
• eine Länge (W21) der gehäuseseitigen Einpressoberfläche (6) in einer axialen Richtung länger ausgebildet ist als eine Länge (W1) des Vorsprungs (23).

2. Befestigungsaufbau (1) des Hohlrads (3) und Differentialgehäuse (2) nach Anspruch 1, wobei
der Vorsprung (23) rechtwinklig zu einer Achse des Hohlrads (3) vorgesehen ist, und
die gehäuseseitige glatte Oberfläche (9) rechtwinklig zu einer Achse des Differentialgehäuses (2) vorgesehen ist.

3. Befestigungsaufbau (1) des Hohlrads (3) und des Differentialgehäuses (2) nach Anspruch 1 oder 2, wobei sich der Vorsprung (23) innerhalb der radseitigen Einpressoberfläche (21) befindet, so dass eine Länge (W2) der randseitigen Einpressoberfläche (21) in einer Einpressrichtung einer Länge (W21) der gehäuseseitigen Einpressoberfläche (6) in der Einpressrichtung gleicht.

4. Differentialeinrichtung (10), die den Befestigungsaufbau (1) des Hohlrads (3) und des Differentialgehäuses (2) nach einem der Ansprüche 1 bis 3 verwendet.

## Revendications

1. Structure (1) pour la fixation d'une couronne dentée (3) sur un carter de différentiel (2), dans lequel la couronne dentée (3) comprend:
- une surface annulaire d'ajustage par pression côté couronne (21); et
- une encoche (5),
le carter de différentiel (2) comprend:
- une surface annulaire d'ajustage par pression côté carter (6) ajustée par pression avec la surface d'ajustage par pression côté couronne (21); et
- une bride (8) sertie dans l'encoche (5),
**caractérisée en ce que**:
- la couronne dentée (3) comporte en outre une saillie (23) qui est formée plus à l'intérieur que la surface d'ajustage par pression côté couronne (21);
- l'encoche (5) est formée sur un côté opposé à la surface d'ajustage par pression côté couronne (21) par rapport à la saillie (23);
- la bride (8) présente un diamètre extérieur (A2) qui est plus petit qu'un diamètre extérieur (A1) de la surface d'ajustage par pression côté carter (6); et
- une surface lisse côté carter (9) du carter de différentiel (2) est placée en contact avec la saillie (23) de telle sorte que la couronne dentée (3) soit positionnée par rapport au carter de différentiel (2); et
- une longueur (W21) de la surface d'ajustage par pression côté carter (6) dans une direction axiale est formée plus longue qu'une longueur (W1) de la saillie (23).

2. Structure de fixation (1) de la couronne dentée (3) et du carter de différentiel (2) selon la revendication 1, dans laquelle:
- la saillie (23) est prévue orthogonale à un axe de la couronne dentée (3); et
- la surface lisse côté carter (9) est prévue orthogonale à un axe du carter de différentiel (2).

3. Structure de fixation (1) de la couronne dentée (3) et du carter de différentiel (2) selon la revendication 1 ou 2, dans laquelle la saillie (23) est positionnée à l'intérieur de la surface d'ajustage par pression côté couronne (21) de telle sorte qu'une longueur (W2) de la surface d'ajustage par pression côté couronne (21) dans une direction d'ajustage par pression soit égale à une longueur (W21) de la surface d'ajustage par pression côté carter (6) dans la direction d'ajustage par pression.

4. Dispositif différentiel (10) qui utilise la structure de fixation (1) de la couronne dentée (3) et du carter de différentiel (2) selon l'une quelconque des revendications 1 à 3.
